# EUROPEAN PATENT SPECIFICATION

(11) **EP 2 796 412 B1**
(45) Date of publication and mention of the grant of the patent: **12.05.2021**
(21) Application number: 13425061.2
(22) Date of filing: 24.04.2013
(51) Int. Cl.: C01F 11/18, B82Y 30/00

(54) **Synthesis of nano-sized CaCO3 particles by spray dryer**
Synthese von CaCO3-Nanopartikeln durch Sprühtrocknung
Synthèse de nanoparticules de CaCO3 par séchage par pulvérisation

(43) Date of publication of application: 29.10.2014
(73) Proprietor: Università Del Salento - Dipartimento Di Ingegneria Dell'Innovazione, 73100 Lecce (LE) (IT)
(72) Inventor: Ciccarella, Giuseppe, 73100 Lecce (IT); Vergaro, Viviana, 73013 Galatina, Lecce (IT)
(74) Representative: Bruni, Giovanni

(56) References cited:
- RU-C1- 2 218 305
- US-A- 2 981 596
- US-A- 4 035 257
- US-A1- 2005 106 110

## Description

The present invention relates to a particles synthesis process of insoluble calcium salts, i.e. insoluble carbonates of other nanometric metals.

As it is better described in the following, the developed technology allows to synthetize nanometric calcium carbonate particles without using surfactants or other chemical species useful to stabilize the mixture and the reaction product, but using a Spray Dryer which allows the temperature, air humidity and reactants flow to be controlled.

Micro and nanometric calcium carbonate inorganic particles are yet provided for various applications and by means of different methods known at the state of the art. In fact, there have been described many synthesis procedures to control the formation of calcium carbonate nanoparticles. Two among these ones seem to be the most important: homogeneous solution precipitation and micro-emulsion synthesis (micelles). Calcium carbonate nanoparticles have been synthetized by means of the in situ deposition technique by Mishra (2005), starting from a PEG complexed-aqueous solution of calcium chloride (CaCl₂), mixed thereafter with an aqueous solution of potassium carbonate (K₂CO₃).

Micro-emulsions are used as special micro-reactants to control the nanometric dimensions of the particles (Karagiozove Monchilova, 2005). CaCO₃ nanoparticles are obtained by means of a chemical reaction in an oil-water micro-emulsion. With this method spherical nanoparticles are synthetized and mono-dispersed dimensionally, with dimensions between 20 and 30 nm. The chemical interaction between CO₂ and the micro-emulsion drops occurs in a reactor provided with a cooling jacket. In addition, there have been widely described calcium carbonate synthesis methods in micro-emulsion systems based on surfactants and subsequent stabilizations with stearic acid (Menahem and Matsai 2008).

Another method for preparing nanoparticles is based on the use of two kinds of foam. One is formed by an aqueous solution of CaCl₂ with an anionic surfactant; the other one is obtained by an aqueous solution of Na₂CO₃ and a cationic surfactant. The two kinds of foam are put in contact in a special apparatus (Guo 2007). The particles dimensions obtained by this method can be controlled by changing the solution concentrations.

Many production processes of calcium carbonate are based on the CaCO₃ precipitation (PCC, precipitated calcium carbonate): it starts from CaO which is subsequently processed and turned in CaCO₃. However, it is also possible to start from natural hydrated lime which is calcinated to obtain CaO and CO₂. The calcium hydroxide Ca(OH)₂ generated after the CaO hydration process is then carbonated. This method is however disadvantageous since to obtain the lime there are used very high temperatures (1000 - 1100°C) and in addition there are needed purification processes with NH₄Cl (ammonium chloride) and Na₂CO₃ (sodium carbonate).

In document US2005/106110 a method for preparation of particles of vaterite calcium carbonate having sizes of 0.2-3 µm is disclosed, where a sodium carbonate solution is charged into a high shear mixer, then a stoichiometric amount of calcium chloride slurry is added. The mixture is stirred at high shear, the filtered and dried.

In document RU2218305 a method for obtaining chemically precipitated calcium carbonate particles is disclosed, where a first and a second solution are mixed by menas of a peristaltic pump.

The processes to realize PCC known at the state of the art need a great quantity of energy and they are carried out in unsafe conditions, since they use high temperatures and chemical reactants as ammonium chloride and sodium carbonate. Another limit of the processes known at the state of the art is the type of the rock/resource, which can be used to obtain calcium carbonate and the quality of the rock itself.

Another limit of the nanosynthesis processes known at the state of the art is the passage in large scale of the synthesis methods developed in laboratory. Such methods need a fine control of the reaction conditions such for example the temperature and suitable surfactant concentrations.

On the other hand, the use of nanometric calcium carbonate use is very interesting from an industrial point of view. In fact, the use of nanometric particles as functional fillers is remarkably considered in the realization of new industrial products.

Traditionally, micrometric CaCO₃ particles are added to polymers with the aim of reducing their formulation costs. However, this generally does not increase the physical properties of the product, and in some cases it can have a negative impact on the same. Recent studies have shown instead that when calcium carbonate is in nanometric form, if efficiently dispersed in the polymer matrix it can give interesting properties to the material.

Calcium carbonate is widely used in the production field of plastics, rubber, adhesives, sealants, paper, inks, covers, varnishes, cosmetics and medicine. By modifying the surface of the calcium carbonate nanometric particles it is possible to control the rheological and mechanical properties of the materials. For example, PVC with calcium carbonate nanoparticles has an extended glass transition temperature, an excellent heat stability, a low viscosity and a good tensile strength.

The nanometric dimensions allow the CaCO₃ to be used as filler without compromising the material strength and ductility in which it is dispersed. This implies advantages in the following applications: in the plastics it is used as filler with the aim of reinforcing the channels and the tubes in which the water flows. Generally it is able to substitute up to 20% of reinforcing additives currently used as CPE, MBS or SBS.

In the plastic material the nanometric calcium carbonate can be used as pigment and can substitute up to 25% of generally used pigments. Another application of nanoparticles in the field of fine chemistry is their use in drug delivery systems. Among the many methods used in the drug delivery, CaCO₃ microcapsules seem to be the most advantageous in many biomedical applications (Fischer 2000).

In all the synthesis methods known at the state of the art, however, as product it is obtained calcium carbonate with surface functionalizations such as oleic acid or SDS (sodium dodecyl sulfate). This represents a limit in the applications in which it is needed pure nanometric calcium carbonate since at the state of the art there are not known treatments for eliminating oleic acid or SDS from CaCO₃, or realization methods of nanometric CaCO₃ as it is.

Therefore, aim of the present invention is to provide a synthesis method for CaCO₃ nanoparticles which is easily usable on large scale and which allows the calcium carbonate particles to be synthetized while controlling form and dimensions without surfactants or other chemical species which make the reaction mixture complex.

Aim of the present invention is then to provide a synthesis method to obtain "pure" CaCO₃, i.e. not contaminated by other chemical species, thanks to the absence of surfactants in the synthesis procedures. The synthesis method of the present invention is described in the following with reference to the appended figures.
Figure 1 shows a scheme of the preferred chemical reaction by means of which the object of the present invention is realized;
Figure 2 shows schematically the functioning mechanism of the spray dryer, as means used to produce the object of the invention;
Figures 3 and 4 show SEM images of the product obtained with the preferred synthesis method.
Figures 5 and 6 show graphs of the Zeta potential of the particles obtained after the treatment with solutions having different pH values;

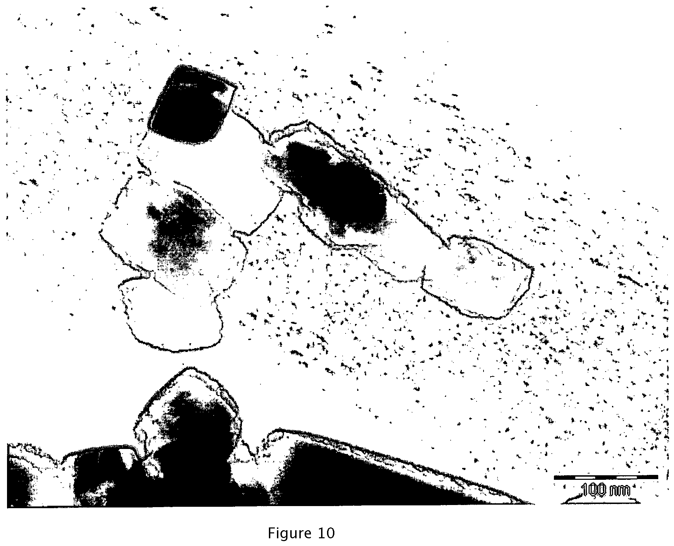

Figures 7 to 10 show TEM microscope images of calcium carbonate nanoparticles samples synthetized by means of the method according to the present invention.

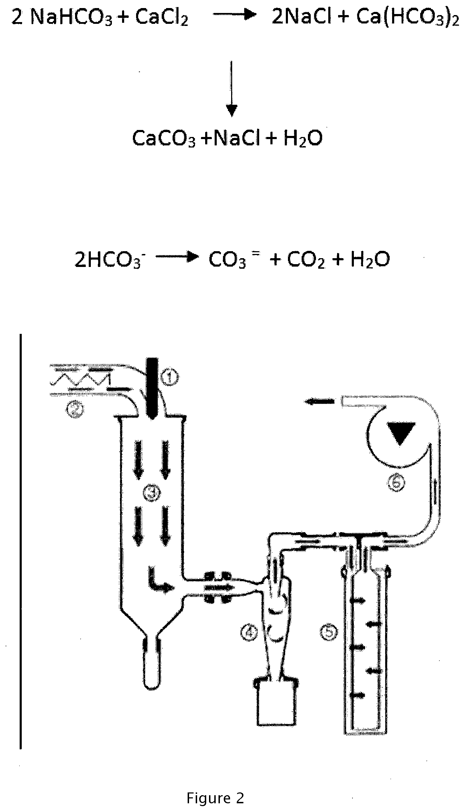

As it is shown in figure 1, the precursors used for the synthesis method of the present invention are NaHCO₃ and CaCl₂.

The two precursors (NaHCO₃ and CaCl₂) are prepared by dissolving the powders in water, so that the stoichiometric ratio between the two compounds, when the solutions are mixed in equal proportions, is 2:1, as it is shown in the reaction balancing shown in figure 1.

For example, there can be prepared the following solutions in ultra pure H₂O:
200 ml NaHCO₃ : PM 84.01 g/mol □ 2.1055 gr in 200ml ultra pure H₂O
200 ml CaCl₂ : PM 147 g/mol □ 1.8375 gr in 200ml ultra pure H₂O The two solutions are then mixed and atomized in a hot air flow.

Conveniently, the two solutions can be mixed by means of a peristaltic pump which sucks, through independent channels, from containers of the two starting solutions. The same are mixed in a ratio 1:1 before atomizing, thus avoiding the calcium carbonate precipitate to be formed before the atomizing.

In the synthesis procedure according to the present invention the solutions containing the precursors, after being mixed, are atomized in a hot air flow indicatively between 100 and 180°C temperature. According to the quantity (and so to the current heat powers) the hot air flow can be generated by a gas system, with electrical resistances or in any other way.

The high temperature causes a rapid evaporation of the reaction mixture water, and allows the direct production of calcium carbonate in powder and of sodium chloride (according to the chemistry shown in figure 1), which are accumulated in a collection vessel; the reaction by-product (NaCI) can be easily removed by means of later water washings.

Conveniently, the CaCO₃ synthesis according to the present invention can be realized by means of a "Spray dryer", which allows to atomize the solutions containing the reaction precursors in a drying chamber in which the hot air flow flows, thus producing drops of little dimension so that their surface/volume ratio is increased and to allow the air flow to act on a very extended surface, in order to obtain a very rapid evaporation of the liquid phase with a following immediate air temperature reducing. In this way the thermolabile products (i.e. those which lose their own activity when the temperature rises) can be treated without losing activity.

When the reaction is occurred the dried product is collected in a container arranged under the drying chamber, while the process air is sucked, filtrated and removed. The finest portion of the precipitate, which is sucked together with the process air, is collected in a separator before a fan discharges the exhausted air in the atmosphere.

Conveniently, the spray dryer can allow to set the nozzle-cleaning as well, which is a parameter which controls automatically, at regular intervals, the needle cleaning, by which the atomizing occurs, so that obstructions of the same are avoided.

Referring to figure 2, it is possible to observe the nozzle (1) which atomizes in a hot air flow obtained by means of the a heater (2) the solutions containing the precursors just mixed. In the drying chambers (3), the aqueous portion of the solutions is evaporated and a precipitate is formed which is separated in the cyclone (4). Conveniently, before the exit of the air flow outwards there can be installed a filter for removing the finest particles, not separated in the cyclone (4). The flow rate can be clearly adjusted by acting on the fan (6).

The powder thus obtained is then collected in a vessel and subjected to cycles of washing with ultra pure H₂O to remove the reaction byproducts. In the following, washings with THF or ethyl ether can be possibly carried out.

In each washing the product is centrifuged (preferably at 3500 rpm for 2 min) and once the centrifuged is re-sospended, it is sonicated to avoid the particle aggregation.

It is to be observed that the synthesis method just described can be used, with respect to the stoichiometric ratios, with different concentrations of the precursors in the starting solutions. Generally, it is observed that when the precursors concentration increases, the process yield increases as well, up to reach the instrumental limit value of 1 gr in 100ml of ultra pure H₂O.

According to another embodiment, the solution containing CaCl₂ can be mostly diluted according to the following proportions:
2.625gr NaHCO₃ in 250ml ultra pure H₂O
2.066gr CaCl₂ in 250ml ultra pure H₂O

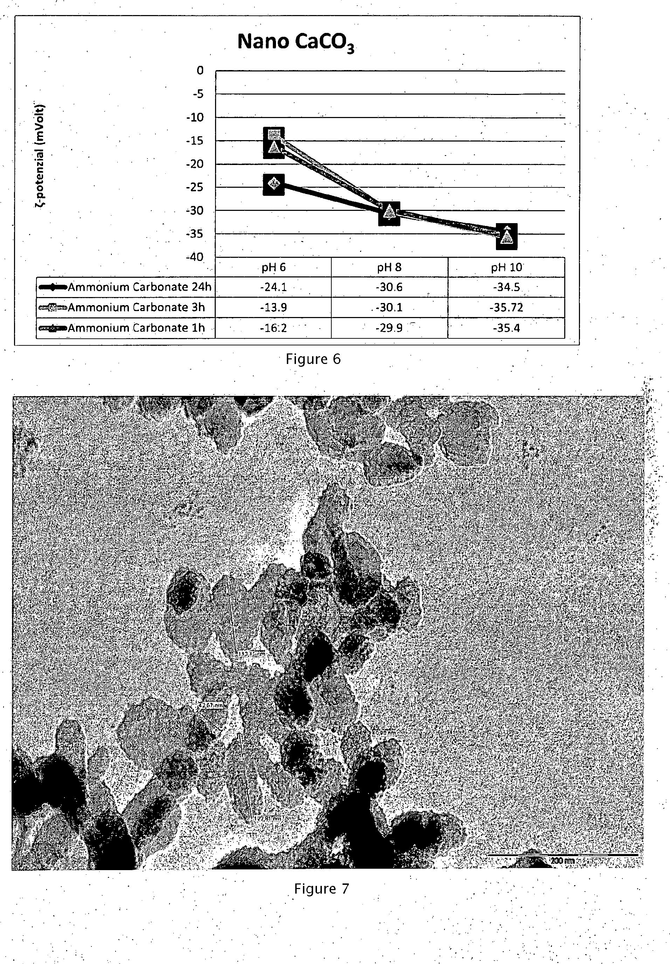

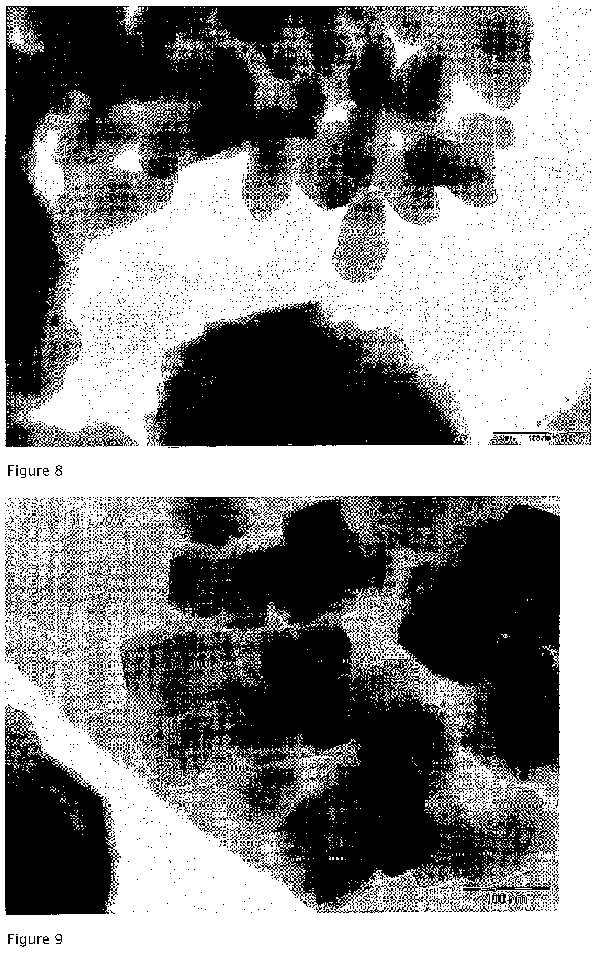

The temperature and hot air flow rate control allows the process reproducibility to be controlled. It is interesting to observe that these are easily controllable parameters in great plants as well. For example, with a temperature about 160°C, an air flow rate in mass (667 L/h) and a liquid flow rate (12,5 ml/min) can be obtained particles lower than 200 nm. In particular nanorods about 100 nm long and about 50 nm wide (figure 7 and figure 8) are obtained.

Without departing from the scope of the present invention, the parameters can be modified to obtain particles of different dimensions.

It is observed that if the air temperature is lower than 160°C, the ratio length/width will be reduced, and about cubic nanoparticles with indicative dimensions 80nm x 80nm are obtained (figure 9).

The particles characterization can be carried out both by means of structural-morphological techniques (SEM and TEM) to study their form and dimensions, and by means of infrared spectroscopy techniques and X ray diffractometry of powders.

After obtaining the calcium carbonate with the synthesis method developed in the present invention and after carrying out the H₂O washings, there can be possibly carried out a washing with a solution of ammonium carbonate (NH₄)₂CO₃, in order to improve the zeta potential of the carbonate particles. It is in fact known that when the absolute value of the particles zeta potential is lower than 20mV, the particles tend to aggregate and particles stacks are formed.

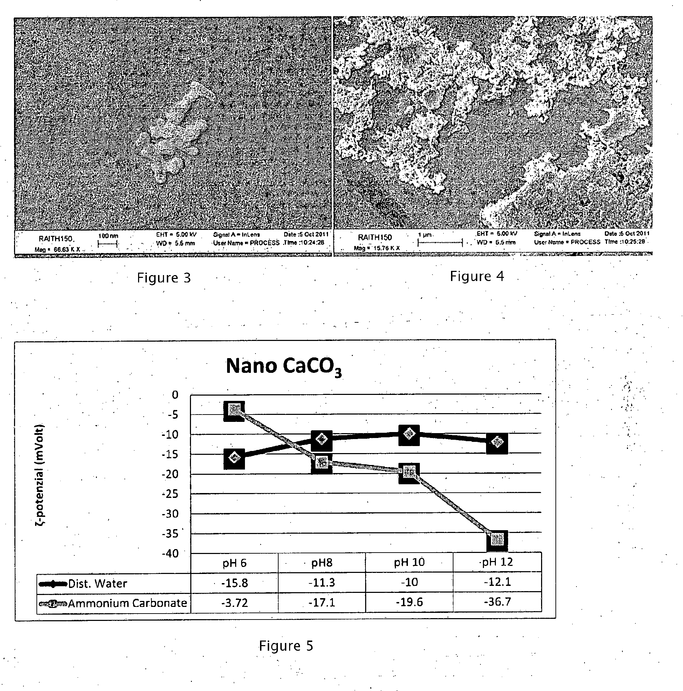

In figure 5, it is shown a comparison between the zeta potential of the particles obtained with the method described in the present invention after the washings with water to remove the sodium chloride and after a suspension of about 12 hours in ammonium carbonate or in water, at different pH.

It can be noted how the zeta potential of the particles obtained only with water washings is between -10mV and -15mV at different tested pH values, while the zeta potential of the particles obtained after incubation with the solution of ammonium carbonate, yet at pH 10 and pH 12, is lower than -20mV.

In figure 6, there are shown the values of the zeta potential measured on the particles after the suspension in carbonate ammonium at different pH and for different incubation times.

As it can be noted, yet after an hour, zeta potentials about -30 mV for solutions with pH higher than 8 are obtained.

However, it is interesting to be noted that also the solution of ammonium carbonate with pH 6 allows to obtain a zeta potential lower than -20mV with an incubation of 24 hours.

This indicates that with the method described in the present invention, it is possible to obtain stable calcium carbonate nanoparticles also by means of washings with solutions with neutral pH (7.0 -7.5). This represents a fundamental aspect above all if the use end of the nanoparticles is biomedical; in fact all the solutions and the reactants used for the *in vitro* and *in vivo* experimentation have preferably pH about neutrality to avoid osmotic shocks in the cells and damage to tissues.

Here, it was described a safe and reproducible method to produce nanometric calcium carbonate particles. The method does not provide the use of high temperatures or hazardous chemical reactants. Starting from two aqueous solutions NaHCO₃ and CaCl₂ by means of a spray-dryer it is possible to obtain pure CaCO₃. The fine powder obtained does not need other processes of purification, so after simple washings with water, it can be used for various applications.

## Claims

1. Method for preparing calcium carbonate comprising the following steps:
- preparing a first solution of NaHCO₃ in H₂O;
- preparing a second solution of CaCl₂ in H₂O;
- mixing the two solutions;
- atomizing the thus obtained solution in a pre-heated air flow at a temperature of 160°C, obtaining the formation of calcium carbonate in powder and sodium chloride
**characterized in that**
said solutions are mixed by means of a peristaltic pump which sucks, through independent channels, from containers of the two starting solutions before being atomized, thus avoiding the calcium carbonate precipitate to be formed before the atomizing
**in that** the reaction is carried out without surfactants and **in that** said air flow is 667 L/h, the liquid flow rate of the mixed solutions is of 12,5 ml/min and **in that** calcium carbonate nanorods 100 nm long and 50 nm wide are obtained.

2. Method for preparing calcium carbonate according to claim 1 further comprising the step of:
- washing the thus obtained powder with ultra pure H₂O to remove sodium chloride.

3. Method for preparing calcium carbonate according to claim 2 further comprising the step of:
- carrying out another washing with THF or ethylic ether.

4. Method for preparing calcium carbonate according to any one of the preceding claims, further comprising the step of:
- carrying out a washing of the products with a solution of ammonium carbonate (NH₄)₂CO₃.

5. Method for preparing calcium carbonate according to claim 4 **characterized in that** the solution of ammonium carbonate has a pH higher than 6 and preferably lower than 8.

6. Method for preparing calcium carbonate according to claim 4 or 5 **characterized in that** the zeta potential of the calcium carbonate nanoparticles is lower than -20mV.

## Patentansprüche

1. Verfahren zur Herstellung von Calcium-Carbonat, umfassend die folgenden Schritte:
- Herstellung einer ersten Lösung von NaHCO₃ in H₂O;
- Herstellung einer zweiten Lösung von CaCl₂ in H₂O;
- Mischung der beiden Lösungen;
- Zerstäubung der so erhaltenen Lösung in einem vorgewärmten Luftstrom bei einer Temperatur von 160°C , wobei die Bildung von pulverförmigen Calcium-Carbonat und Natriumchlorid erhalten wird,
dadurch charakterisiert, dass
die Lösungen werden gemischt mittels einer Schlauchpumpe, die durch unabhängige Kanäle aus Behältern der beiden Startlösungen ansaugt, bevor sie zerstäubt werden, wodurch die Bildung von Calcium-Carbonat-Niederschlag vor der Verstäubung vermieden wird,
wobei die Reaktion ohne Tenside durchgeführt wird und wobei der Luftstrom beträgt 667 L/h, die Geschwindigkeit des Flüssigkeitsstroms der gemischten Lösungen beträgt 12,5 ml/min und
wobei Calciumcarbonat-Nanostäbe mit einer Länge von 100 nm und einer Breite von 50 nm erhalten werden.

2. Verfahren zur Vorbereitung von Calcium-Carbonat nach Anspruch 1, weiter umfassend den folgenden Schritt:
- Waschen des so erhaltenen Pulvers mit ultrareinem H₂O zur Entfernung von Natriumchlorid.

3. Verfahren zur Vorbereitung von Calcium-Carbonat nach Anspruch 2, weiter umfassend den folgenden Schritt:
- weiteres Waschen mit THF oder Ethylether.

4. Verfahren zur Vorbereitung von Calcium-Carbonat nach einem der vorhergehenden Ansprüche, ferner umfassend den folgenden Schritt:
- Waschen der Produkte mit einer Lösung von Ammoniumcarbonat (NH₄) ₂CO₃.

5. Verfahren zur Vorbereitung von Calcium-Carbonat nach Anspruch 4, **dadurch gekennzeichnet, dass** die Lösung von Ammonium-Carbonat ein pH-Wert höher als 6 und vorzugsweise kleiner als 8, aufweist.

6. Verfahren zur Vorbereitung von Calcium-Carbonat nach Anspruch 4 oder 5, **dadurch gekennzeichnet, dass** das Zeta-Potential der Kalziumkarbonat-Nanopartikel kleiner als -20 mV ist.

## Revendications

1. Procédé de préparation de carbonate de calcium comprenant les étapes suivantes:
- préparation d'une première solution de NaHCO₃ dans H₂O;
- préparation d'une deuxième solution de CaCl₂ dans H₂O;
- mélange des deux solutions;
- atomisation de la solution ainsi obtenue dans un flux d'air préchauffé à une température de 160°C, avec obtention de la formation de carbonate de calcium en poudre et de chlorure de sodium,
**caractérisé en ce que**
les solutions sont mélangées au moyen d'une pompe péristaltique qui aspire, par des canaux indépendants, des récipients des deux solutions de départ avant d'être atomisées, évitant ainsi la formation du précipité de carbonate de calcium avant l'atomisation
et que la réaction est effectuée sans surfactants et que
le flux d'air est de 667 L/h, le vitesse du flux liquide des solutions mélangées est de 12,5 ml/min et que
des nanorods de carbonate de calcium de 100 nm de long et de 50 nm de large sont obtenus.

2. Procédé de préparation de carbonate de calcium selon la revendication 1, comprenant en outre l'étape consistant à:
- laver la poudre ainsi obtenue avec de l'H₂O ultra pur pour éliminer le chlorure de sodium.

3. Procédé de préparation de carbonate de calcium selon la revendication 2, comprenant en outre l'étape consistant à:
- effectuer un autre lavage au THF ou à l'éther éthylique.

4. Procédé de préparation de carbonate de calcium selon l'une quelconque des revendications précédentes, comprenant en outre l'étape consistant à:
- effectuer un lavage des produits avec une solution de carbonate d'ammonium (NH₄)₂CO₃.

5. Procédé de préparation de carbonate de calcium selon la revendication 4, **caractérisé en ce que** la solution de carbonate d'ammonium a un pH supérieur à 6 et de préférence inférieur à 8.

6. Procédé de préparation de carbonate de calcium selon la revendication 4 ou 5, **caractérisé en ce que** le potentiel zêta des nanoparticules de carbonate de calcium est inférieur à -20mV.
